Europäisches Patentamt

European Patent Office

Office européen des brevets

(11) Veröffentlichungsnummer: **0 121 251**
**A2**

(12) **EUROPÄISCHE PATENTANMELDUNG**

(21) Anmeldenummer: 84103528.0

(22) Anmeldetag: 30.03.84

(51) Int. Cl.³: **G 11 B 1/04**
**//G11B31/00**

(30) Priorität: 02.04.83 DE 8309828 U

(43) Veröffentlichungstag der Anmeldung:
10.10.84 Patentblatt 84/41

(84) Benannte Vertragsstaaten:
AT BE CH DE FR GB IT LI NL SE

(71) Anmelder: AV-Hähnel Gesellschaft für elektronische
Bild- und Tonanlagen mbH
Dürenerstrasse 105-107
D-5000 Köln 41(DE)

(72) Erfinder: Hähnel, Günter
Vossbruch 28a
D-5253 Lindlar(DE)

(74) Vertreter: Berkenfeld, Helmut, Dipl.-Ing.
An der Schanz 2
D-5000 Köln 60(DE)

(54) Tragbare Farbmonitor-Video-Kassettenrecorder-Kombination.

(57) Die tragbare Kombination enthält als wesentliche Bestandteile ein Gehäuse (12), einen Monitor (16) und einen Recorder (22). Die beiden letzteren sind in dem Gehäuse (12) nebeneinander oder übereinander angeordnet. Monitor (16) und Recorder (22) weisen keine eigenen Gehäuse auf, sondern sind beide bausteinmäßig im Gehäuse (12) angeordnet.

FIG.4

EP 0 121 251 A2

## Tragbare Farbmonitor-Video-Kassettenrecorder-Kombination

Die Erfindung betrifft eine tragbare Farbmonitor-Video-Kassettenrecorder-Kombination mit einem einen Tragegriff aufweisenden Gehäuse und in diesem angeordneten Monitor und Kassettenrecorder.

Farbmonitoren, im folgenden kurz Monitoren genannt, sind Bildschirmgeräte, auf denen die im allgemeinen über ein Kabel zugeführten Videosignale farbig dargestellt werden. Die Darstellung erfolgt dabei im allgemeinen nicht zur Unterhaltung, wie bei den üblichen Fernsehprogrammen, sondern zur Überwachung oder Belehrung. Ein Video-Kassettenrecorder ist ein Gerät, mit dem die auf einem Magnetband magnetisch gespeicherten Video- und Tonsignale zur Weiterleitung an einen Monitor in elektrische Signale umgesetzt werden. Im Stand der Technik sind aus diesen beiden Geräten bestehende Kombinationen bekannt. Unter anderem werden sie dazu verwendet, einem Kunden ein Produkt optisch und akustisch vorzuführen. Damit wird das Verkaufsgespräch erleichtert. Unter Umständen wird es sogar erst mit dieser Kombination möglich, wenn es sich um ein Produkt oder um eine Anlage handelt, die allein mit Worten nur schwierig zu beschreiben ist, so daß sie dem Kunden vorgeführt werden müßte, was aber wegen ihrer Größe häufig nicht möglich ist. Hier hat man im Stand der Technik mit einer solchen Kombination Abhilfe geschaffen. Dazu hat man einen fertigen, in sich abgeschlossenen Monitor und einen ebensolchen Kassettenrecorder genommen und beide in ein Gehäuse eingesetzt. Für den Anfang einer technischen Entwicklung stellt eine solche Kombination ein brauchbares Ergebnis dar. Sie
ist jedoch mit Nachteilen behaftet. Ein entscheidender Nachteil
liegt in ihrem hohen Gewicht und ihren großen Abmessungen. Diese
sind deshalb besonders nachteilig, da die Kombination tragbar
ist und von ihrem Verwender möglichst leicht mitgeführt werden
soll. Das hohe Gewicht und die großen Abmessungen ergeben sich
daraus, daß bei der bekannten Kombination der Monitor ein eigenes stabiles und damit großes und schweres Gehäuse aufweist, daß
auch der Recorder ein eigenes stabiles und damit großes und
schweres Gehäuse aufweist und diese beiden Gehäuse dann noch in
ein drittes den Tragegriff aufweisendes Gehäuse eingeschoben
sind. Der Verwender muß daher drei Gehäuse mit sich tragen, ohne
daß hierzu eine konstruktive Notwendigkeit besteht.

Hiervon ausgehend liegt der Erfindung die Aufgabe zugrunde, eine
Kombination der genannten Art leicht und klein und damit handlich auszubilden, ohne daß hierunter die erforderliche Stabilität leidet. Die Lösung für diese Aufgabe ergibt sich nach der
Erfindung dadurch, daß der Monitor und der Recorder ohne eigenes
Gehäuse bausteinmäßig in einem gemeinsamen Gehäuse angeordnet
sind. Abweichend vom Stand der Technik wird daher nicht mehr ein
Gehäuse um zwei fertige in sich abgeschlossene Geräte herumgebaut, sondern ein nur als Baustein ausgebildeter Monitor und Recorder werden in ein eigenes, allein auf sie abgestimmtes Gehäuse eingesetzt. Damit entfallen das Volumen und das Gewicht, das
bisher die eigenen Gehäuse von Monitor und Recorder aufwiesen.
Dies ist von großem Vorteil, wenn man bedenkt, daß die Kombination von ihrem Verwender wie ein Stück Handgepäck mitgeführt
wird.

Die bekannten Recorder weisen Rechteckform auf und sind so ausgebildet, daß sich die Einschuböffnung für die Kassette auf ihrer Oberseite befindet. Entsprechend sind die Recorder in den
bekannten Kombinationen so angeordnet, daß auch diese Einschuböffnung oben liegt und von oben beschickt werden kann. Bei einer
Anordnung von Monitor und Recorder nebeneinander führt dies zu
einer großen Länge der Kombination. Diese läßt sich dann nur
noch schwierig tragen und kann nicht mehr als ein Stück Handgepäck angesehen werden. Hier schafft die Erfindung dadurch Abhilfe, daß der Monitor und der Recorder - wie an sich bekannt - in dem Gehäuse nebeneinander angeordnet sind, der Rechteckform aufweisende Recorder jedoch hochkant und damit mit seiner großen Achse vertikal verläuft. Damit wird die Kombination wesentlich schmaler. Dies führt wieder dazu, daß sie sich wesentlich einfacher tragen läßt.

In einer weiteren Ausgestaltung dieses Gedankens ist nach der Erfindung vorgesehen, daß das Gehäuse in seiner am Recorder anliegenden Seitenwand eine Öffnung und der Recorder innerhalb dieser Öffnung einen herausschiebbaren Rahmen mit einer Einschuböffnung für eine Video-Kassette aufweist, die Abmessungen des Rahmens denen der Öffnung entsprechen und am Rahmen ein von außen an die Gehäuse-Seitenwand anlegbarer Verschlußdeckel befestigt ist. Die Einschuböffnung für die Kassette am Recorder und die darüberliegende Öffnung im Gehäuse sind nun auch seitlich angeordnet. Dabei ist aber als weiteres erfinderisches Merkmal hervorzuheben, daß ein bekannter Recorder nicht nur um 90° gekippt wurde, so daß seine sonst oben liegende Einschuböffnung nun seitlich liegt. Zusätzlich wurde der gesamte Recorder so umkonstruiert, daß auch seine Bedienungstasten und -knöpfe und dergleichen nun in der Vertikalen verlaufen. Auch hierin zeigt sich der erfinderische Grundgedanke, nicht mehr einen fertigen Monitor und einen fertigen Recorder in ein Gehäuse einzuschieben, sondern die Teile auf ihren Verwendungszweck in der Kombination abzustimmen.

In einer weiteren zweckmäßigen Ausgestaltung ist vorgesehen, daß die Frontplatten von Monitor und Recorder gleiche vertikale Abmessungen aufweisen. Dies führt nicht nur zu einer gefälligen Vorderseite der Kombination, sondern erleichtert auch den Einbau und die Befestigung. Der Einbau und die Stabilität der Kombination werden gemäß einem weiteren erfinderischen Merkmal dadurch erhöht, daß das Gehäuse durch eine vertikal verlaufende Zwischenwand in zwei Abteilungen unterteilt ist und der Monitor in der einen und der Recorder in der anderen Abteilung aufgenommen ist. Durch diese Zwischenwand wird die Stabilität des Gehäu-

0121251

ses wesentlich erhöht und verhindert, daß der Monitor oder der Recorder in der Vertikalen liegende Kräfte aufnehmen müssen. Solche können auftreten, wenn die Kombination als Reisegepäck befördert wird und in einem Gepäckstapel unten steht.

Im vorstehenden wurde geschildert, daß Monitor und Recorder in einem gemeinsamen Gehäuse nebeneinander angeordnet sind. Als weitere Möglichkeit schlägt die Erfindung vor, daß der Monitor in dem Gehäuse auch unten und der Recorder in diesem über dem Monitor angeordnet sind und der Rechteckform aufweisende Recorder mit seiner großen Achse horizontal verläuft. Auch bei dieser Ausführungsform weisen Monitor und Recorder kein eigenes Gehäuse auf und sind als Bausteine in einem einzigen gemeinsamen Gehäuse angeordnet. Auch bei dieser Ausführungsform ist das Gehäuse durch eine diesmal horizontal verlaufende Zwischenwand in zwei Abteilungen unterteilt, wobei der Monitor in der oberen und der Recorder in der unteren Abteilung aufgenommen ist. Bei dieser Ausführungsform, bei der der Monitor und der Recorder übereinander angeordnet sind, liegt der Schwerpunkt der Kombination ohne weiteres in deren Mitte, und sie läßt sich einfach tragen. Gegenüber den bekannten Kombinationen ergibt sich bei beiden erfindungsgemäßen Ausführungsformen der Vorteil eines niedrigeren Gewichtes. Monitor und Recorder sind lediglich als Bausteine ausgebildet und weisen kein eigenes Gehäuse auf. Gegenüber den bekannten Kombinationen liegt das Gewicht der erfindungsgemäßen Kombination damit um das Gewicht der beiden einzelnen Gehäuse niedriger. Ebenso liegen die Kosten der erfindungsgemäßen Kombination niedriger.

Beim Betrieb der Kombination gehen von den Bausteinen des Monitors elektromagnetische Schwingungen aus, die man allgemein
Störfrequenzen nennt. Bei räumlicher Nähe des Monitors und des
Recorders gelangen diese Störfrequenzen auf die Köpfe des Recorders. Wenn nun dieser die Bildröhre des Monitors steuert,
gelangen die Störfrequenzen auf den Bildschirm und erzeugen
dort Bildstörungen. Mit der Erfindung soll nun eine Möglichkeit geschaffen werden, diese Bildstörungen mit geringem konstruktivem Aufwand zu unterdrücken. Hierzu sieht die Erfindung
in einer zweckmäßigen Ausgestaltung vor, daß die Bausteine des
Recorders auf einer Seite einer metallischen Montageplatte angeordnet sind und deren andere Seite den Bausteinen des Farbmonitors zugewendet ist. Mit anderen Worten heißt dies, daß die
Bausteine des Recorders auf einer Montageplatte befestigt werden
und diese so im Gehäuse befestigt wird, daß sie die Bausteine
des Recorders von denen des Farbmonitors abtrennt. Damit erfüllt die Montageplatte nicht nur die mechanische Aufgabe, die
Bausteine des Recorders zu halten, sondern auch die elektromechanische Aufgabe, die Bausteine des Recorders gegenüber denen
des Monitors abzuschirmen. Dabei muß sie, was ein erfindungsgemäßes Merkmal darstellt, bis an den Innenrand des Gehäuses heranreichen, damit dort keine Spalte freibleiben, durch die die
sogenannten Störfrequenzen durchtreten könnten. Die Befestigung
der Montageplatte im Gehäuse erfolgt an in diesem vorgesehenen
Abstützblöcken, an denen auch die Bildröhre befestigt ist. Das
heißt, daß die Befestigung der Montageplatte im Gehäuse keine
besondere Formgebung des Gehäuses verlangt und dieses in den
gleichen Formen gespritzt, gepreßt oder allgemein hergestellt
werden kann, die auch ohne Montageplatte verwandt wurden.

Damit die Montageplatte ihre Aufgabe einer elektromagnetischen
Abschirmung erfüllen kann, besteht sie in einer weiteren Ausgestaltung aus einem hohe elektrische Leitfähigkeit aufweisenden
Metall, zum Beispiel Aluminium.

Es wurde bereits angedeutet, daß für die erfindungsgemäßen Zwekke aus Kostengründen das gleiche Gehäuse verwendet werden soll,
das auch ohne Einbau der erfindungsgemäßen Montageplatte verwendet wird. Zum Erreichen dieses Zieles ist vorgesehen, daß die
Abstützblöcke im Gehäuse am Rand der den Bildschirm aufnehmenden Öffnung an deren vier Ecken vorgesehen sind, die Bildröhre
mit an ihr vorgesehenen Laschen auf diesen aufliegt, an der
Montageplatte auf deren von den Bausteinen des Recorders abgewendeten Seite  ein Winkel vorgesehen ist, dieser auf den gleichen Abstützblöcken wie die Laschen aufliegt und Laschen und
Winkel durch Schrauben auf den Abstützblöcken gehalten sind.
Bei dieser Art der Befestigung ist es weiter gleichgültig und
liegt im Rahmen der Erfindung, ob der Recorder bzw. die seine
Bausteine tragende Montageplatte im Gehäuse über, seitlich von
oder unter der Bildröhre angeordnet ist.

Am Beispiel der in der Zeichnung gezeigten Ausführungsformen
wird die Erfindung nun weiter beschrieben. Dabei ist:

Fig. 1 eine perspektivische Ansicht derjenigen Ausführungsform
von vorne, bei der Monitor und Recorder nebeneinander
liegen,

Fig. 2 eine perspektivische Ansicht dieser Ausführungsform von
oben,

Fig. 3 eine perspektivische Ansicht dieser Ausführungsform
schräg von hinten mit besonderer Darstellung der Einschuböffnung des Recorders und einer Videokassette,

Fig. 4 eine perspektivische auseinandergezogene Darstellung der
Einzelteile dieser Ausführungsform,

Fig. 5 eine Fig. 4 entsprechende perspektivische, auseinandergezogene Darstellung der anderen Ausführungsform mit der
Anordnung von Monitor und Recorder übereinander,

Fig. 6 eine perspektivische Ansicht auf den vorderen Teil des
Gehäuses von hinten zur Darstellung der Abstützblöcke,

Fig. 7 in vergrößertem Maßstab die Darstellung eines Abstützblockes,

Fig. 8 ein Schnitt entlang der Schnittlinie VIII - VIII in Fig.
7 mit gleichzeitiger Darstellung der Befestigung der
Bildröhre und der Montageplatte an einem Abstützblock,

Fig. 9 eine auseinandergezogene Darstellung des Gehäuses, der
Bildröhre und der Montageplatte mit Verdeutlichung von
deren gemeinsamer Befestigung an den Abstützblöcken,

Fig.10 die vereinfachte Vorderansicht des Gehäuses mit einer
Anordnung von Monitor und Recorder nebeneinander,

Fig.11 eine entsprechende Aufsicht mit besonderer Darstellung
der gemeinsamen Befestigung von Recorder und Bildröhre
an den Abstützblöcken,

Fig.12 eine vereinfachte Ansicht eines Gehäuses von vorne mit
der Anordnung des Recorders über dem Monitor,

Fig.13 eine entsprechende Seitenansicht mit besonderer Darstellung der gemeinsamen Befestigung der Montageplatte und
der Bildröhre an den gleichen Abstützblöcken,

Fig.14 eine vereinfachte Ansicht von vorne auf das Gehäuse mit
einer Anordnung des Recorders unter dem Farbmonitor und

Fig.15 eine entsprechende Seitenansicht mit besonderer Darstellung der gemeinsamen Befestigung von Bildröhre und Montageplatte an den gleichen Abstützblöcken.

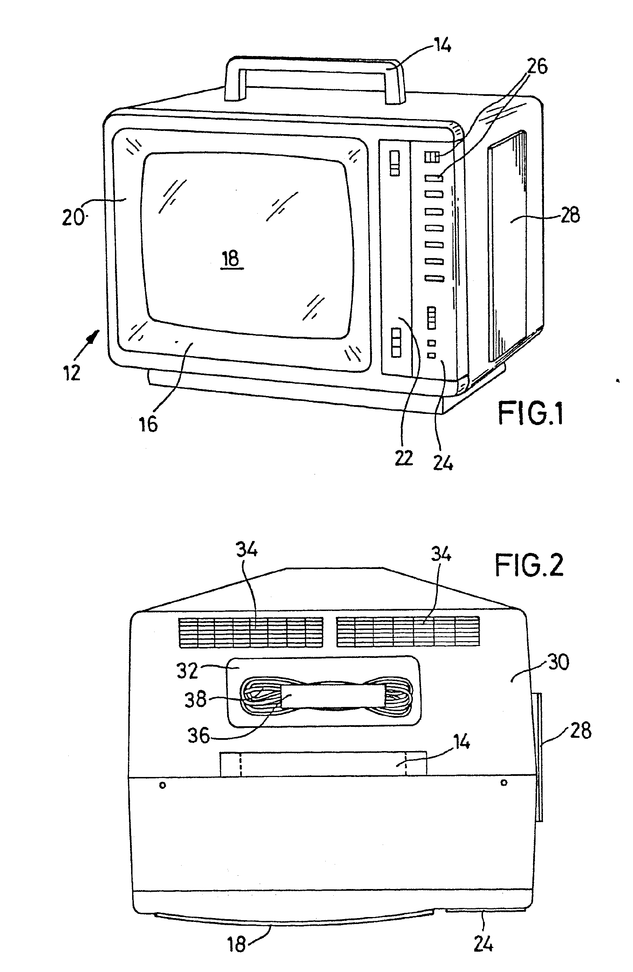

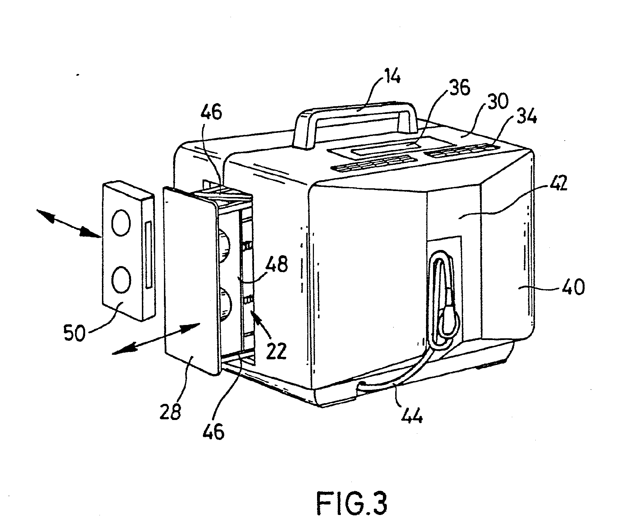

Die Figuren 1 bis 3 zeigen in leicht erkennbarer Weise das gemeinsame Gehäuse 12 mit dem Tragegriff 14. In diesem ist bei Blick auf Fig. 1 der Farbmonitor 16 links angeordnet. Er weist einen Bildschirm 18 und eine Frontplatte 20 auf. Rechts neben dem Monitor 16 befindet sich der Video-Cassetten-Recorder 22 mit der Frontplatte 24. Seine Bedienungstasten 26 sind vertikal übereinander angeordnet. Wie bereits ausgeführt wurde, stellt dies eine erfindungsgemäße Umkonstruktion dar. Seitlich neben dem Recorder 22 befindet sich ein Verschlußdeckel 28. Mit diesem wird die in Fig. 3 sichtbare Gehäuseöffnung 48 abgedeckt. Fig. 2 zeigt die Oberseite 30 des Gehäuses 12 mit einer Vertiefung 32 und zwei Entlüftungsgittern 34. In der Vertiefung liegt ein Mikrofon 36 mit einer Mikrofonschnur 38. Fig. 3 zeigt die Rückwand 40 mit einer Einbuchtung 42. In dieser kann die Netzschnur 44 bei Nichtgebrauch und bei Transport eingelegt werden. An der in Fig. 3 links liegenden Seite befindet sich der Video-Kassetten-Recorder 22. Er ist in einem Rahmen 46 in Form von zwei Scheren gehalten. Mit diesen Scheren kann er in Richtung des Doppelpfeiles aus der Gehäuseöffnung 48 heraus in die gezeigte Betriebsstellung bewegt werden. In dieser läßt sich eine Videokassette 50 in den Recorder 22 einschieben. Durch Druck auf den Verschlußdeckel 28 wird der Recorder 22 in das Gehäuse 12 hineingeschoben. Das Entscheidende an dem Recorder 22 und dessen Einbaulage ist, daß er hochkant angeordnet und die Kassette 50 seitlich in ihn hineingeschoben wird. Überdies weist er, wie in Fig. 1 dargestellt, vertikal übereinanderliegende Bedienungstasten 26 auf.

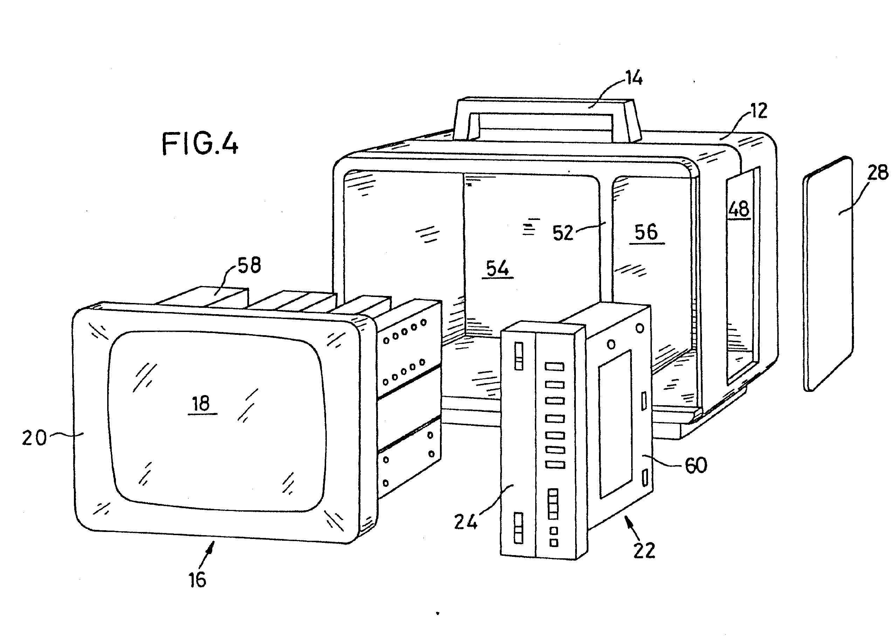

Gemäß der Darstellung in Fig. 4 wird das Gehäuse 12 durch eine vertikal verlaufende Zwischenwand 52 in zwei Abteilungen 54 und 56 aufgeteilt. Die größere Abteilung 54 nimmt den Monitor 16 und die kleinere Abteilung 56 nimmt den Recorder 22 auf. Fig. 4 zeigt weiter, daß diese aus einzelnen Bausteinen 58 bzw. 60 bestehen. Fig. 4 zeigt weiter, daß der Monitor 16 und der Recorder 22 in sich nicht abgeschlossen sind und kein eigenes Gehäuse aufweisen.

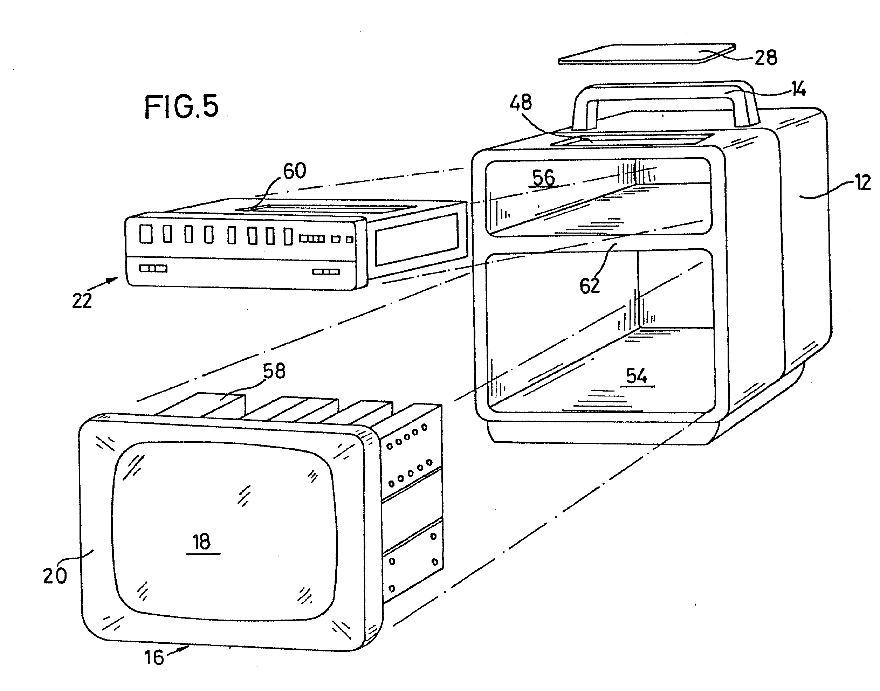

Fig. 5 zeigt diejenige Ausführungsform, bei der der Monitor 16 und der Video-Kassetten-Recorder 22 übereinander angeordnet sind. Das Gehäuse 12 wird durch eine horizontal verlaufende Zwischenwand 62 in eine untere Abteilung 54 und eine obere Abteilung 56 aufgeteilt. Die Abteilung 54 nimmt den Farbmonitor 16 und die kleinere Abteilung 56 nimmt den Video-Kassetten-Recorder 22 auf. Die Darstellung zeigt wieder den Aufbau des Monitors 16 aus den Bausteinen 58 und des Video-Kassetten-Recorders 22 aus dem Baustein 60. Eigene Gehäuse besitzen sie nicht.

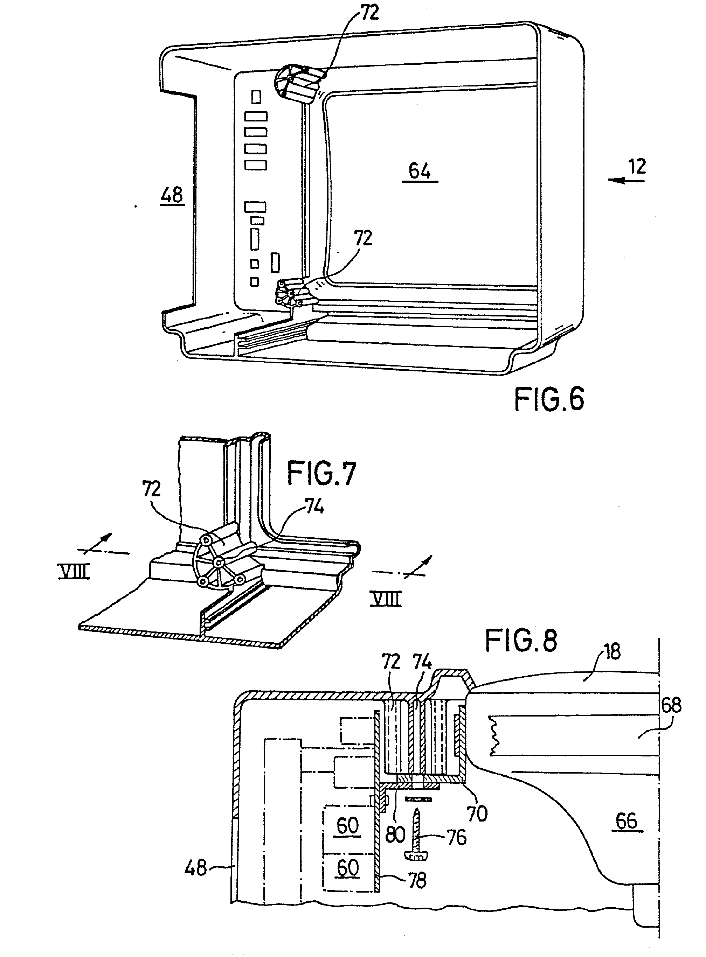

Fig. 6 zeigt die Innenseite des Vorderteils des zweiteiligen Gehäuses 12. An den Ecken der den Bildschirm 18 aufnehmenden Öffnung 64 sind integral mit dem Gehäuse verbundene Abstützblöcke 72 vorgesehen. In diesen befinden sich Löcher 74 zum Einstecken von Schrauben 76. Auf die Figuren 7 und 8 sei verwiesen. Gemäß der Darstellung in Fig. 8 weist die Bildröhre 66 ein auf ihren Kolben aufgelegtes oder aufgepreßtes Befestigungsband 68 auf. Dieses weist seinerseits vier Laschen 70 auf. Entgegen der Darstellung in Fig. 8 können sie integral mit dem Band 68 ausgebildet sein. Fig. 8 zeigt weiter einen Teil der Montageplatte 78. Auf dieser sind die Bausteine 60 des Recorders befestigt. Auf der von diesen Bausteinen 60 abgewendeten Seite ist ein Winkel 80 an der Montageplatte 78 befestigt. Ebenso wie die Lasche 70 liegt er auf einem Abstützblock 72 auf. Lasche 70 und Winkel 80 sind gebohrt. Daher kann die Schraube 76 durchgesteckt und zum Befestigen der Lasche 70 und des Winkels 80 in das Loch 74 hineingeschraubt werden. Die Figuren 6 und 8 zeigen die Anordnung des Recorders seitlich von der Bildröhre 66. Dies bedeutet, daß die Montageplatte 78 vertikal im Gehäuse 12 verläuft.

Dabei liegt sie dann auf den beiden seitlich von der Öffnung 64 liegenden und in Fig. 6 sichtbaren Abstützblöcken 72 auf. Damit wird auch ein Kippen der Montageplatte 78 verhindert. Ebenso verläuft sie im Gehäuse vollständig von dessen Boden bis zu dessen Oberseite. Damit werden auch die Bausteine 60 des Recorders vollständig von den im einzelnen nicht dargestellten Bausteinen des Farbmonitors 16 abgeschirmt.

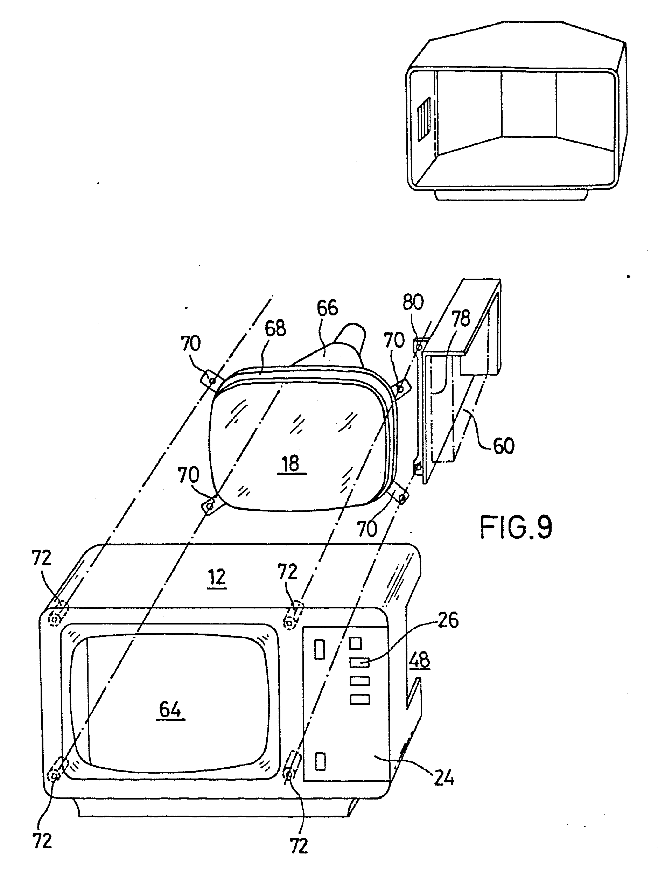

Fig. 9 läßt erkennen, daß der Winkel 80 oben und unten gebohrt ist. Mit diesen seinen beiden Bohrungen fluchtet er mit den Bohrungen in zwei Laschen 70. Damit liegen die Bohrungen im Winkel 80 und in den Laschen 70 in einer Linie mit zwei Abstützblöcken 72. Dies wird mit den strichpunktierten Linien angezeigt. Fig. 9 läßt weiter erkennen, daß die Montageplatte 78 auch von oben und von der Seite über die Bausteine 60 herübergezogen ist und damit diese gegenüber dem Farbmonitor abschirmt.

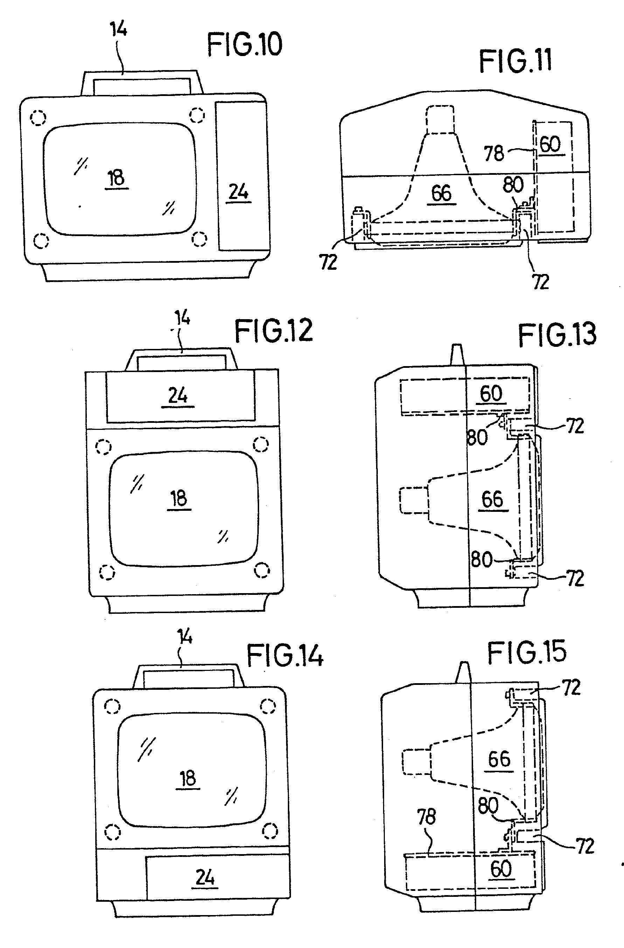

Die Lehren der Erfindung sind unabhängig davon anzuwenden, ob der Recorder seitlich, über oder unter dem Farbmonitor angeordnet ist. Die Figuren 10 und 11 zeigen eine Anordnung nebeneinander. Dies entspricht der Darstellung in den Figuren 6, 8 und 9. Die Figuren 12 und 13 zeigen die Anordnung des Recorders über dem Farbmonitor. Hier wird der Winkel 80 an den beiden oberen Abs-tützblöcken 72 befestigt. Die Figuren 14 und 15 zeigen eine Anordnung des Recorders unter dem Farbmonitor. Hier wird der Winkel 80 an den beiden unteren Abstützblöcken 72 befestigt. In sämtlichen drei Fällen wird das erfindungsgemäße Ziel erreicht, daß die Montageplatte 78 die Bausteine 60 des Recorders gegenüber dem Farbmonitor abschirmt und die Beeinflussung durch die sogenannten Störfrequenzen ausschließt. Weiter zeigt sich, daß zur Befestigung der Winkel 80 die normalen Gehäuse verwendet werden können.

67/40

Schutzansprüche

1. Tragbare Farbmonitor-Video-Kassettenrecorder-Kombination mit
   einem einen Tragegriff aufweisenden Gehäuse und in diesem angeordneten Monitor und Kassettenrecorder, dadurch gekennzeichnet, daß der Monitor (16) und der Recorder (22) ohne eigenes Gehäuse bausteinmäßig in einem gemeinsamen Gehäuse (12)
   angeordnet sind.

2. Kombination nach Anspruch 1, dadurch gekennzeichnet, daß der
   Monitor (16) und der Recorder (22) in dem Gehäuse (12) nebeneinander angeordnet sind, der Rechteckform aufweisende Recorder (22) hochkant und damit mit seiner großen Achse vertikal
   verläuft.

3. Kombination nach Anspruch 2, dadurch gekennzeichnet, daß das
   Gehäuse (12) in seiner am Recorder (22) anliegenden Seitenwand eine Öffnung (48) und der Recorder (22) innerhalb dieser Öffnung einen herausschiebbaren Rahmen (46) mit einer
   Einschuböffnung für eine Video-Kassette (50) aufweist, die
   Abmessungen des Rahmens (46) denen der Öffnung (48) entsprechen und am Rahmen (46) ein von außen an die Gehäuse-Seitenwand anlegbarer Verschlußdeckel (28) befestigt ist.

4. Kombination nach Anspruch 2 und 3, dadurch gekennzeichnet,
   daß die Frontplatten (20, 24) von Monitor (16) und Recorder
   (22) gleiche vertikale Abmessungen aufweisen.

5. Kombination nach Anspruch 2 bis 4, dadurch gekennzeichnet, daß das Gehäuse (12) durch eine vertikal verlaufende Zwischenwand (52) in zwei Abteilungen (54, 56) unterteilt ist und der Monitor(16) in der einen (54) und der Recorder (22) in der anderen (56) Abteilung aufgenommen ist.

6. Kombination nach Anspruch 1, dadurch gekennzeichnet, daß der Monitor (16) in dem Gehäuse (12) unten und der Recorder (22) in diesem über dem Monitor (16) angeordnet ist und der Rechteckform aufweisende Recorder (22) mit seiner großen Achse horizontal verläuft.

7. Kombination nach Anspruch 6, dadurch gekennzeichnet, daß das Gehäuse (12) durch eine horizontal verlaufende Zwischenwand (62) in zwei Abteilungen (54, 56) unterteilt ist und der Monitor (16) in der einen oberen (54) und der Recorder (22) in der anderen unteren (56) Abteilung aufgenommen ist.

8. Kombination nach Anspruch 1 bis 7, dadurch gekennzeichnet, daß die Bausteine (60) des Recorders (22) auf einer Seite einer metallischen Montageplatte (78) angeordnet sind und deren andere Seite den Bausteinen (58) des Farbmonitors (16) zugewendet ist.

9. Kombination nach Anspruch 8, dadurch gekennzeichnet, daß die Montageplatte (78) an im Gehäuse (12) vorgesehenen Abstützblöcken (72) befestigt ist, an denen auch die Bildröhre (66) befestigt ist.

10. Kombination nach Anspruch 8, dadurch gekennzeichnet, daß die Montageplatte (78) aus einem hohe elektrische Leitfähigkeit aufweisenden und elektromagnetisch abschirmenden Metall besteht.

11. Kombination nach Anspruch 8 bis 10, dadurch gekennzeichnet, daß die Abstützblöcke (72) im Gehäuse (12) am Rand der den Bildschirm (18) aufnehmenden Öffnung (64) an deren vier Ecken vorgesehen sind, die Bildröhre (66) mit an ihr vorgesehenen Laschen (70) auf diesen aufliegt, an der Montageplatte
(78) auf deren von den Bausteinen (60) des Recorders (22)
abgewendeten Seite ein Winkel (80) vorgesehen ist, dieser
auf den gleichen Abstützblöcken (72) wie die Laschen (70)
aufliegt und Laschen (70) und Winkel (80) durch Schrauben
(76) auf den Abstützblöcken (72) gehalten sind.

K 67/40

FIG.1

FIG.2

0121251

FIG.3

FIG.4

FIG.5

0121251

K 67/35

FIG.6

FIG.7

FIG.8

K 67/40

FIG.9

K 67/40

FIG.10

FIG.11

FIG.12

FIG.13

FIG.14

FIG.15

K 67/4(